**Europäisches Patentamt**

**European Patent Office**

**Office européen des brevets**

(19)

(11) Veröffentlichungsnummer : **0 071 097**
**B1**

(12) **EUROPÄISCHE PATENTSCHRIFT**

(45) Veröffentlichungstag der Patentschrift :
13.06.84

(51) Int. Cl.³ : **C 01 B 21/14**

(21) Anmeldenummer : **82106340.1**

(22) Anmeldetag : **15.07.82**

(54) Verfahren zur Herstellung von Hydroxylammoniumsalzen.

(30) Priorität : **31.07.81 DE 3130305**

(43) Veröffentlichungstag der Anmeldung :
**09.02.83 Patentblatt 83/06**

(45) Bekanntmachung des Hinweises auf die Patenterteilung : **13.06.84 Patentblatt 84/24**

(84) Benannte Vertragsstaaten :
**BE CH DE FR GB IT LI NL**

(56) Entgegenhaltungen :
CH-A- 453 316
DE-C- 885 396
NL-A- 7 902 291

(73) Patentinhaber : **BASF Aktiengesellschaft**
**Carl-Bosch-Strasse 38**
**D-6700 Ludwigshafen (DE)**

(72) Erfinder : **Grosskinsky, Otto-Alfred, Dr.**
**Semmelweisstrasse 8**
**D-6700 Ludwigshafen (DE)**
Erfinder : **Frommer, Elmar, Dr.**
**Lisztstrasse 117**
**D-6700 Ludwigshafen (DE)**
Erfinder : **Rapp, Guenther, Dr.**
**Mundenheimer Strasse 174**
**D-6700 Ludwigshafen (DE)**
Erfinder : **Thomas, Erwin**
**Borngasse 12**
**D-6713 Freinsheim (DE)**

## Beschreibung

Gegenstand der Erfindung ist ein Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur.

Bei der katalytischen Reduktion von Stickstoffmonoxid mit Wasserstoff wird Stickstoffmonoxid nicht nur zu Hydroxylamin reduziert sondern es entsteht unter anderen Nebenprodukten auch Distickstoffoxid. Abgesehen davon, daß die Bildung von Nebenprodukten unerwünscht ist, bildet Distickstoffoxid mit Wasserstoff und Stickstoffmonoxid explosive Gemische insbesondere dann, wenn die Umsetzung unter erhöhtem Druck durchgeführt wird. Aus der europäischen Patentanmeldung 0008479 ist bekannt, daß man bei der Herstellung von Hydroxylamin durch katalytische Reduktion von Stickstoffmonoxid dem Ausgangsgasgemisch 10 bis 80 Vol.-% Stickstoff beimischt um sicherzustellen, daß man kein explosives Gasgemisch erhält. Eine solche Arbeitsweise hat jedoch den Nachteil, daß das anfallende Abgas nicht mehr verwertet werden kann und zudem die Reaktionsgeschwindigkeit beeinträchtigt wird.

Es war deshalb die technische Aufgabe gestellt, die Herstellung von Hydroxylammoniumsalzen durch katalytische Reduktion von Stickstoffmonoxid so zu gestalten, daß die Bildung von Distickstoffoxid vermindert wird ohne daß die Reaktionsgeschwindigkeit beeinträchtigt wird.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur, unter Vermeidung der Schaumbildung an der Oberfläche des Reaktionsgemisches, wobei man einen Platinträgerkatalysator verwendet, der weniger als 10 Gew.-% einer Korngröße kleiner als 10 μm enthält.

Das neue Verfahren hat den Vorteil, daß auf einfache Weise die Bildung von Distickstoffmonoxid vermindert wird. Ferner hat das Verfahren den Vorteil, daß es mit hohen Ausbeuten verläuft.

In der Regel hält man ein Molverhältnis von Wasserstoff zu Stickstoffmonoxid von 1,5 : 1 bis 6 : 1 ein. Besonders gute Ergebnisse erhält man, wenn man darauf achtet, daß in der Reaktionszone ein Molverhältnis von Wasserstoff zu Stickstoffmonoxid von 3,5 bis 5 : 1 aufrecht erhalten wird.

Vorteilhaft verwendet man als Säuren starke Mineralsäuren wie Chlorwasserstoffsäure, Salpetersäure, Schwefelsäure oder Phosphorsäure. Geeignet sind auch deren saure Salze wie Ammoniumbisulfat. Besonders bevorzugt wird Schwefelsäure oder Ammoniumbisulfat verwendet. In der Regel geht man von 4 bis 6 normalen wäßrigen Säuren aus und läßt im Verlauf der Reaktion die Säurekonzentrationen nicht unter 0,2 normal fallen.

Unter Reaktionsgemisch versteht man erfindungsgemäß die obengenannte Lösung von wäßrigen Säuren, die zusätzlich Hydroxylammoniumsalze, Nebenprodukte, Katalysatoren sowie gelöste Gase enthalten. Die Umsetzung führt man vorteilhaft bei Temperaturen von 30 bis 80 °C durch. Besonders bewährt haben sich Temperaturen von 40 bis 60 °C. In der Regel führt man die Umsetzung bei Atmosphärendruck oder erhöhtem Druck, z. B. bis zu 200 bar, durch. Besonders bewährt hat sich die erfindungsgemäße Arbeitsweise, wenn man die Umsetzung unter erhöhtem Druck durchführt, z. B. unter Drücken von 1,5 bis 20 bar.

Die Umsetzung wird in Gegenwart von Platinträgerkatalysatoren durchgeführt. Besonders bewährt haben sich Platin auf Kohleträger, insbesondere auf Grafit. Vorzugsweise hat ein solcher Trägerkatalysator einen Gehalt von 0,2 bis 5 Gew.-% Platin. Vorteilhaft enthalten die Katalysatoren zusätzlich ein oder mehrere Elemente der 5. oder 6. Hauptgruppe des Periodischen Systems mit einem Atomgewicht > 30, ferner Blei und/oder Quecksilber als vergiftende Mittel. Geeignete Katalysatoren und deren Herstellung werden beispielsweise beschrieben in der DE-PS 920 963, 956 038, 945 752 oder 1 088 037. Während der Reaktion liegt der Trägerkatalysator als Suspension in der Reaktionslösung vor.

Die Umsetzung führt man in der Regel so durch, daß man Stickstoffmonoxid und Wasserstoffe unten in die suspendierten Platinträgerkatalysator enthaltende wäßrige Mineralsäure einleitet und durch mechanische Mittel, z. B. Rühren oder Umpumpen des Reaktionsgemisches für eine gleichmäßige Verteilung sorgt. Die nicht umgesetzten Gase scheiden sich als Gaspolster über dem Reaktionsgemisch ab. Aus ungeklärten Gründen bildet sich an der Oberfläche des Reaktionsgemisches eine Schaumzone aus. Ein wesentliches Merkmal der Erfindung ist es, daß man die Schaumbildung, d. h. die Schaumzone auf der Oberfläche des Reaktionsgemisches vermeidet, oder zumindesten im wesentlichen unterdrückt. Hierzu ist die nachfolgend aufgeführte Maßnahme geeignet.

Man verwendet einen Platinträgerkatalysator, dessen Anteile mit einer Korngröße < 10 μm weniger als 10 Gew.-% betragen. Besonders bewährt hat sich ein Platinträgerkatalysator mit einer Korngröße von 30 bis 90 μm. Die Feinanteile des Katalysators können unschwer durch geeignete Maßnahmen, z. B. Sieben entfernt werden.

In der DE-PS 968 363, Beispiel 1 und Journal of the American Chemical Society, Band 78, 1956, Seite 4202, wird für die Herstellung von Hydroxylamin durch katalytische Hydrierung von Stickstoffmonoxid in saurem Medium gelehrt, daß die gasförmigen Ausgangsstoffe bei diskontinuierlicher und kontinuierlicher Arbeitsweise vor Eintritt in das Reaktionsgemisch vorgemischt und als Gemisch zugeführt werden. Es war deshalb zu erwarten, daß nur ideal vorgemischte Gase hohe Ausbeuten und hohe Raum-Zeit-Ausbeuten ergeben. Nach einer vorteilhaften Arbeitsweise führt man Wasserstoff und Stickstoffmonoxid getrennt voneinander dem Reaktionsgemisch zu. Diese Arbeitsweise hat sich insbesondere dann bewährt, wenn man erhöhten Druck anwendet. Im Hinblick auf den Stand der Technik war es überraschend, daß man auch hohe Ausbeuten und Raum-Zeit-Ausbeuten erhält, ohne Vorvermischen der Ausgangsgase.

Hydroxylammoniumsalze werden zur Herstellung von Oximen, z. B. Cyclohexanonoxim, einem Ausgangsstoff für Caprolactam, verwendet.

Das Verfahren nach der Erfindung sei in folgenden Beispielen veranschaulicht.

### Beispiel 1

In einem Druckgefäß aus Edelstahl werden 5 l 4,1 n Schwefelsäure sowie 500 g eines Platinkatalysators auf Grafit mit einem Platingehalt von 0,5 Gew.-% und einer Korngröße von 30 bis 90 $\mu$m vorgelegt. Der Katalysator wird durch Rühren mit einer Kombination Blattrührer und Korbrührer, wobei der Blattrührer nicht vollständig in die Flüssigkeit eintaucht suspendiert. Innerhalb von 45 Minuten werden 740 l Wasserstoff sowie 425 l Stickstoffmonoxid von unten getrennt zugeführt. Die Umsetzung wird unter einem Druck von 9 bar durchgeführt und das Reaktionsgemisch durch Kühlen auf eine Temperatur von 40 °C gehalten. Durch den nicht eintauchenden Blattrührer wird die Oberfläche des Reaktionsgemisches fortlaufend mit Reaktionsgemisch besprüht und die Ausbildung einer Schaumzone unterdrückt. Nichtumgesetzte Gase werden über ein Druckhalteventil abgeleitet. Sobald die Schwefelsäure nahezu aufgebraucht ist, wird die Reaktion unterbrochen und das Reaktionsgemisch entspannt. Nähere Einzelheiten sind aus folgender Tabelle zu entnehmen :

### Tabelle

|  | Beispiel | | |
|  | la | 1b | 1c |
| --- | --- | --- | --- |
| Druck | 9 | 9 | 9 |
| Reaktionszeit (Min.) | 45 | 45 | 45 |
| Endkonzentration der Reaktionslösung n $H_2SO_4$ | 0,38 | 0,33 | 0,41 |
| Umgesetzte NO-Menge (Mol) | 17,9 | 17,8 | 17,8 |
| Gebildete $NH_2OH$-Menge · g | 525,7 | 553,9 | 533,2 |
| $NH_2OH$-Ausbeute % bez. auf umgesetztes NO | 88,9 | 94,2 | 94,4 |
| $NH_3$ % | 8,0 | 3,8 | 3,3 |
| $N_2O$ % | 3,2 | 2,0 | 2,3 |
| Raum-Zeit-Ausbeute | 4,68 | 4,48 | 4,47 |

Führt man die Umsetzung, wie oben beschrieben, ohne Zusatz von schaumhemmenden Mitteln durch, so bildet sich an der Oberfläche des Reaktionsgemisches eine Schaumzone aus : Die Ausbeute an Hydroxylamin sinkt auf 55 Gew.-% und die Menge an Distickstoffoxid in der Gasphase steigt auf 30 % an.

### Ansprüche

1. Verfahren zur Herstellung von Hydroxylammoniumsalzen durch katalytische Reduktion von Stickstoffmonoxid mit Wasserstoff in verdünnten wäßrigen Lösungen von Mineralsäuren in Gegenwart von suspendierten Platinträgerkatalysatoren bei erhöhter Temperatur, unter Vermeidung der Schaumbildung an der Oberfläche des Rektionsgemisches, dadurch gekennzeichnet, daß man einen Platinträgerkatalysator verwendet, der weniger als 10 Gew.-% einer Korngröße kleiner als 10 $\mu$m enthält.

2. Verfahren nach Anspruch 1, dadurch gekennzeichnet, daß man die Umsetzung unter erhöhtem Druck durchführt und Wasserstoff sowie Stickstoffmonoxid getrennt voneinander dem Reaktionsgemisch zuführt.

### Claims

1. A process for the preparation of hydroxylammonium salts by catalytic reduction of nitric oxide with hydrogen in a dilute aqueous solution of a mineral acid in the presence of a suspended supported platinum catalyst and at elevated temperature, while avoiding the formation of foam at the surface of the reaction mixture, wherein a supported platinum catalyst is used which contains less than 10 % by weight of particles having a size of less than 10 $\mu$m.

2. A process as claimed in claim 1, wherein the reaction is carried out under superatmospheric pressure, and hydrogen and nitric oxide are fed separately into the reaction mixture.

**Revendications**

1. Procédé de préparation de sels d'hydroxylammonium par réduction catalytique d'oxyde azotique avec de l'hydrogène, en solutions aqueuses diluées d'acides minéraux, en présence de catalyseurs sur support de platine, mis en suspension, à température élevée, en évitant le moussage à la surface du mélange de réaction, caractérisé par le fait qu'on utilise un catalyseur sur support de platine, qui contient moins de 10 % en poids de grains d'une grosseur inférieure à 10 μm.

2. Procédé selon la revendication 1, caractérisé par le fait qu'on effectue la réaction sous pression élevée et qu'on amène au mélange de réaction l'hydrogène ainsi que l'oxyde azotique séparément l'un de l'autre.